# EUROPÄISCHE PATENTSCHRIFT

(11) **EP 2 801 875 B1**
(45) Veröffentlichungstag und Bekanntmachung des Hinweises auf die Patenterteilung: **04.04.2018**
(21) Anmeldenummer: 14167022.4
(22) Anmeldetag: 05.05.2014
(51) Int. Cl.: G05B 19/042

(54) **Steuermodul für umfangreiche Messdatenvolumen**
Control module for large measurement data volume
Module de commande pour volume de données de mesure important

(30) Priorität: 07.05.2013 DE 102013104707
(43) Veröffentlichungstag der Anmeldung: 12.11.2014
(73) Patentinhaber: Endress + Hauser Messtechnik GmbH+Co. KG, 79576 Weil am Rhein (DE)
(72) Erfinder: Breithaupt, Hartmut, 74523 Schwäbisch-Hall (DE); Gampp, Stefan, 79809 Weilheim (DE); Mast, Manfred, 70195 Stuttgart (DE); Schuker, Michael, 79595 Rümmingen (DE)
(74) Vertreter: Andres, Angelika Maria

(56) Entgegenhaltungen:
- EP-A1- 2 197 291
- US-A1- 2004 088 065
- US-A1- 2007 244 571
- US-A1- 2012 107 921
- US-B1- 7 315 788

## Beschreibung

Die Erfindung betrifft eine Abfüllanlage zur dosierten Abfüllung eines fließfähigen Mediums gemäß dem Oberbegriff des Anspruchs 1 mit einem Steuerungssystem, aufweisend ein Steuermodul zum Steuern von mindestens einer Füllstelle in der Abfüllanlage. Des Weiteren betrifft die Erfindung ein Verfahren zur Steuerung einer Abfüllanlage gemäß Anspruch 14.

Eine Abfüllanlage zum dosierten Abfülten eines fließfähigen Mediums in Behälter (beispielsweise Flaschen) umfasst in der Regel einen Vorlagebehälter, der das fließfähige Medium enthält, sowie eine Mehrzahl von Abfüllstellen, die über eine zentrale Zuführleitung mit dem Vorlagebehälter in Verbindung stehen. Zur automatisierten Steuerung des Abfüllvorgangs werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Als Feldgeräte werden im Prinzip alle Geräte bezeichnet, die prozessnah eingesetzt werden und die prozessrelevante Informationen liefern oder verarbeiten.

Eine Vielzahl solcher Feldgeräte wird von der Firma Endress+Hauser hergestellt und vertrieben.

Der Abfüllvorgang in einer Abfüllmaschine sollte nur kurze Zeit in Anspruch nehmen, damit ein hoher Durchsatz erzielt werden kann. Dennoch sollte die Abfüllmenge, die in jeden Behälter gefüllt wird, möglichst genau stimmen. Dabei kommt es insbesondere darauf an, eine vorgegebene Abfüllmenge mit guter Reproduzierbarkeit abzufüllen, wobei über eine Charge hinweg lediglich geringe Abweichungen von der Sollmenge auftreten sollen. Insofern ist es wichtig, die Vorgänge in einer Abfüllanlage messtechnisch möglichst genau erfassen zu können.

Es ist Aufgabe der Erfindung, eine Abfüllanlage mit einem Steuerungssystem zum Steuern einer oder mehrerer Füllstellen der Abfüllanlage zur Verfügung zu stellen, welches in der Lage ist, umfangreiche Messdaten zu erfassen und zu bearbeiten.

Aus der Druckschrift US 2007/0244571 ist ein Steuermodul bekannt, das zum Steuern einer Füllstelle geeignet ist, insbesondere werden beispielsweise Sensoren zum Erfassen und Aktoren zum Beeinflussen eines Durchflusses eines fließfähigen Mediums genannt.

Gelöst wird diese Aufgabe durch die in den Ansprüchen 1, und 14 angegebenen Merkmale. Vorteilhafte Weiterentwicklungen der Erfindung sind in den Unteransprüchen angegeben.

Eine Abfüllanlage zur dosierten Abfüllung eines fließfähigen Mediums gemäß der vorliegenden Erfindung weist einen Vorlagebehälter auf, der ein fließfähiges Medium enthält, sowie eine Mehrzahl von Füllstellen, die über eine Zuführleitung an den Vorlagebehälter angeschlossen sind. Die Abfüllanlage ist gekennzeichnet durch ein Steuerungssystem.

Das Steuerungssystem umfasst ein Steuermodul zum Steuern von mindestens einer der Füllstellen, mindestens einen Sensor zum Erfassen von Messdaten, der über mindestens eine Datenverbindung mit dem Steuermodul verbunden ist, eine Speichereinheit zum Speichern von Messdaten, die über eine Datenverbindung mit dem Steuermodul verbunden ist, und mindestens einen Aktor, der über mindestens eine Datenverbindung mit dem Steuermodul verbunden ist. Dabei sind zumindest die Datenverbindungen zwischen dem Steuermodul, dem mindestens einen Sensor und der Speichereinheit für Echtzeitanforderungen ausgelegt. Das Steuermodul ist dazu ausgelegt, von dem mindestens einen Sensor empfangene Messdaten in Echtzeit zu verarbeiten und in Echtzeit vollständig oder teilweise zur Speichereinheit zu schreiben, und das Steuermodul ist dazu ausgelegt, aus den Messdaten Schaltsignale für den mindestens einen Aktor abzuleiten.

Das Steuermodul umfasst mindestens eine Schnittstelle zum Anschluss von mindestens einem Sensor zum Erfassen von Messdaten, zum Anschluss von einer Speichereinheit zum Speichern von Messdaten und zum Anschluss von mindestens einem Aktor. Das Steuermodul ist dazu ausgelegt, über die mindestens eine Schnittstelle Datenverbindungen zu dem mindestens einen Sensor, zu der Speichereinheit und zu dem mindestens einen Aktor auszubilden, wobei zumindest die Datenverbindungen zu dem mindestens einen Sensor und zu der Speichereinheit für Echtzeitanforderungen ausgelegt sind. Das Steuermodul ist dazu ausgelegt, von dem mindestens einen Sensor empfangene Messdaten in Echtzeit zu verarbeiten und in Echtzeit vollständig oder teilweise zur Speichereinheit zu schreiben, und das Steuermodul ist dazu ausgelegt, aus den Messdaten Schaltsignale für den mindestens einen Aktor abzuleiten. Das Steuermodul umfasst unterschiedliche Betriebsmodule für unterschiedliche Füllmethoden.

Durch die Auslegung der Datenverbindungen zwischen dem Steuermodul und dem mindestens einen Sensor für Echtzeitanforderungen können die von dem mindestens einen Sensor erfassten Messdaten in kurzem zeitlichen Abstand zum Steuermodul übertragen werden. Anstatt einzelner Messwerte werden dem Steuermodul somit gut aufgelöste Messkurve zur weiteren Auswertung zugeführt. Dadurch wird eine genaue Erfassung der Vorgänge in der Abfüllanlage ermöglicht. Dies schließt auch eine umfassende Diagnose von Störungen sowie die Möglichkeit einer vorausschauenden Wartung mit ein. Auch die Datenverbindung zwischen dem Steuermodul und der Speichereinheit ist für Echtzeitanforderungen ausgelegt. Dies eröffnet die Möglichkeit, die umfangreichen Messdaten, die das Steuermodul von dem mindestens einen Sensor empfängt, in Echtzeit an die mindestens eine Speichereinheit zu schreiben. Dadurch wird eine umfangreiche Datenbasis für die Analyse der Vorgänge in der Abfüllanlage geschaffen.

Die von dem mindestens einen Sensor empfangenen Messdaten dienen dem Steuermodul als Ausgangspunkt für die Erzeugung von Schaltsignalen für den mindestens einen Aktor. Da die vom Sensor empfangenen Messdaten genauer sind als bei bisherigen Lösungen, können auch die Schaltsignale mit besserer Genauigkeit erzeugt werden. Dadurch wird die Genauigkeit der Abfüllung verbessert.

Nachfolgend ist die Erfindung anhand von in der Zeichnung dargestellten Ausführungsbeispielen näher erläutert. Es zeigen:
Fig. 1 eine schematische Darstellung einer Abfüllanlage;
Fig. 2 eine schematische Darstellung einer Abfüllanlage, welche einen Umwälzkreislauf umfasst;
Fig. 3 eine Darstellung einer Abfüllanlage, die durch eine Mehrzahl von Steuermodulen gesteuert wird;
Fig. 4 eine Übersicht über ein Steuerungssystem für eine Abfüllanlage;
Fig. 5A eine erste Möglichkeit zum Überprüfen einer Füllkennlinie in Echtzeit;
Fig. 5B eine weitere Möglichkeit zum Überprüfen einer Füllkennlinie in Echtzeit;
Fig. 6 ein Steuermodul, das vier unterschiedliche Füllverfahren unterstützt; und
Fig. 7 verschiedene Möglichkeiten zum Abgleich zwischen den verschiedenen vom Steuermodul der Abfüllanlage unterstützten Füllverfahren.

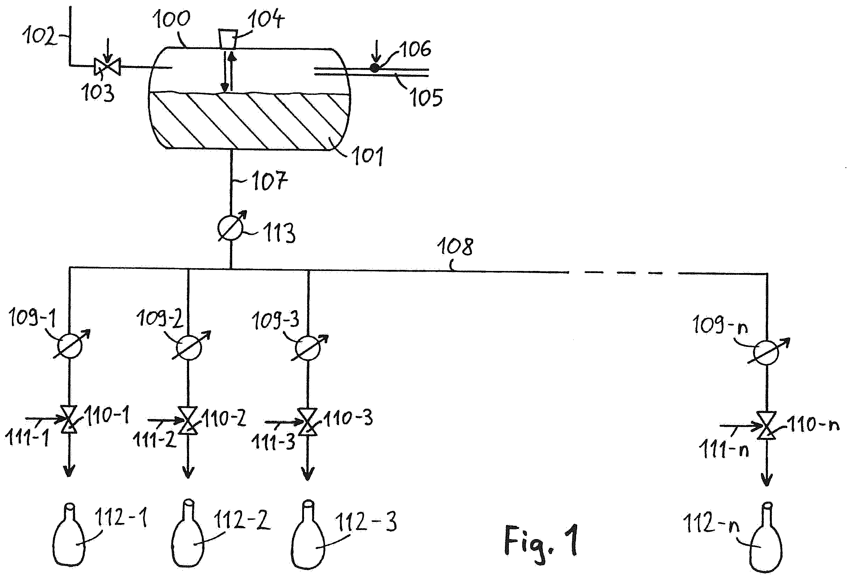

Fig. 1 zeigt eine Abfüllanlage, die dazu ausgelegt ist, ein fließfähiges Medium in Behälter abzufüllen, beispielsweise in Flaschen. Die Abfüllanlage umfasst einen Vorlagebehälter 100, der das fließfähige Medium 101 enthält. Das fließfähige Medium kann über eine Zuführleitung 102 in den Vorlagebehälter 100 eingefüllt werden, wobei der Zustrom von fließfähigem Medium über das Regelventil 103 eingestellt wird. Zur Messung des Füllstands im Vorlagebehälter 100 kann ein Füllstandsmessgerät 104 vorgesehen sein, das den Füllstand im Vorlagebehälter 100 beispielsweise kapazitiv oder mittels Radar bestimmt. Die Zufuhr von fließfähigem Medium kann mittels des Regelventils 103 in Abhängigkeit vom Füllstand gesteuert werden.

Damit das fließfähige Medium schnell und präzise abgefüllt werden kann, wird das Medium mit einem Druck beaufschlagt. Hierzu ist der Vorlagebehälter 100 mit einer Druckluftleitung 105 verbunden, die dazu dient, den Vorlagebehälter 100 mit einem Druck zu beaufschlagen. Dabei kann der Druck mittels des Druckregelventils 106 eingestellt werden. Auf diese Weise ist gewährleistet, dass das fließfähige Medium 101 während des Abfüllvorgangs unter einem vorgegebenen Druck steht.

Der Vorlagebehälter 100 ist über eine Rohrleitung 107 mit einer zentralen Zuführleitung 108 verbunden, und an die zentrale Zuführleitung 108 ist eine Anzahl n von Füllstellen angeschlossen. Den angeschlossenen Füllstellen wird das fließfähige Medium über die zentrale Zuführleitung 108 zugeführt.

Jede der Füllstellen umfasst einen Durchflussmesser 109-1 bis in sowie ein Abfüllventil 110-1 bis 110-n. Jedem Abfüllventil 10-1 bis 110-n wird ein Steuersignal 111-1 bis 111-n zugeführt, welches das Öffnen und Schließen des jeweiligen Abfüllventils 110-1 bis 110-n steuert. Während eines Abfüllzyklus werden die unter den Füllstellen positionierten Flaschen 112-1 bis 112-n mit dem fließfähigen Medium befüllt und anschließend weitertransportiert. Das Befüllen der Flaschen 112-1 bis 112-n erfolgt in kurzer Zeit; vorzugsweise dauert ein Abfüllzyklus weniger als 1 Sekunde. Während des Abfüllzyklus erfasst das jeweilige Durchflussmessgerät 109-1 bis 109-n die Menge des fließfähigen Mediums, die durch das jeweilige Durchflussmessgerät 109-1 bis 109-n hindurch fließt. Durch die Durchflussmessung kann gewährleistet werden, dass die Flaschen 112-1 bis 112-n mit der gewünschten Menge von fließfähigem Medium befüllt werden.

Am Vorlagebehälter 100, an der Rohrleitung 107 oder an der zentralen Zuführleitung 108 ist ein Druckmessgerät 113 zur Bestimmung des Drucks des fließfähigen Mediums angeordnet. In Abhängigkeit von dem so bestimmten Druck im Medium kann das Druckregelventil 106 für die Druckluftzufuhr so geregelt werden, dass der Druck des fließfähigen Mediums auf einen vorbestimmten Wert eingestellt wird.

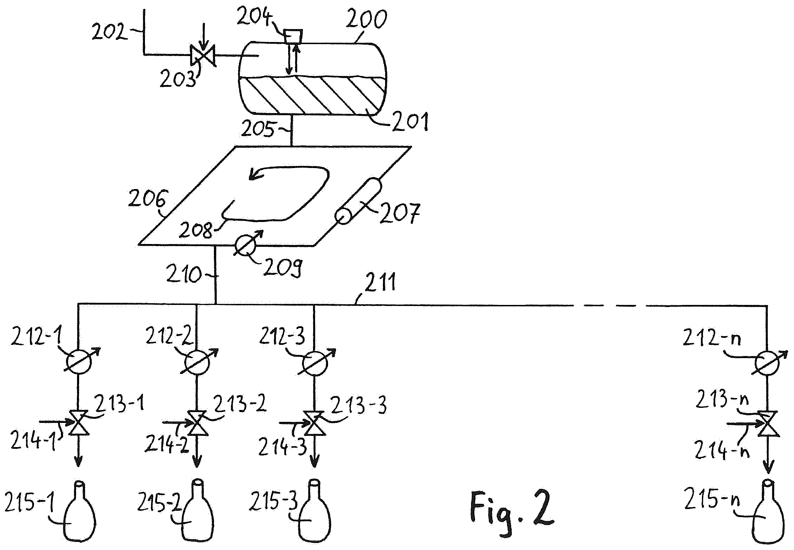

In Fig. 2 ist eine alternative Ausführungsform einer Abfüllanlage gezeigt, die zum dosierten Abfüllen eines fließfähigen Mediums eingesetzt wird. Die in Fig. 2 gezeigte Abfüllanlage umfasst einen Vorlagebehälter 200, der zumindest teilweise mit einem fließfähigen Medium 201 gefüllt ist. Über eine Zuleitung 202 kann fließfähiges Medium in den Vorlagebehälter 200 eingefüllt werden, wobei der Zufluss von fließfähigem Medium über das Regelventil 203 gesteuert wird. Zur Erfassung des Füllstands im Vorlagebehälter 200 kann ein Füllstandsmessgerät 204 vorgesehen sein.

Der Vorlagebehälter 200 ist über eine Rohrleitung 205 mit einem Umwälzkreislauf 206 verbunden. Der Umwälzkreislauf 206 umfasst eine Umwälzpumpe 207, die das fließfähige Medium ständig durch den Umwälzkreislauf pumpt, wie durch den Pfeil 208 veranschaulicht ist. Durch das Umwälzen des fließfähigen Mediums im Medium ein Druck erzeugt, der durch die Pumpgeschwindigkeit der Umwälzpumpe 207 bestimmt wird. Der Umwälzkreislauf 206 umfasst ein Druckmessgerät 209, das den Druck des Mediums erfasst. Die Pumpgeschwindigkeit der Umwälzpumpe 207 kann dann in Abhängigkeit von gemessenem Druck so eingeregelt werden, dass ein gewünschter Druck des Mediums erreicht wird.

Der Umwälzkreislauf 206 ist über eine Rohrleitung 210 mit einer zentralen Zuführleitung 211 verbunden, und an die zentrale Zuführleitung 211 sind eine Anzahl n von Füllstellen angeschlossen. Jede der n Füllstellen umfasst ein aurchflussmessgarät 212-1 bis 212-n sowie ein Abfüllventil 213-1 bis 213-n, das durch ein zugehöriges Steuersignal 214-1 bis 214-n gesteuert wird. Durch das Steuersignal 214-1 bis 214-n wird das Öffnen und Schließen des Abfüllventils 213-1 bis 213-n gesteuert. Unterhalb der Füllstellen befinden sich die zu befüllenden Flaschen 215-1 bis 215-n, Die Flaschen 215-1 bis 215-n werden innerhalb eines Abfüllzyklus befüllt und anschließend weitertransportiert.

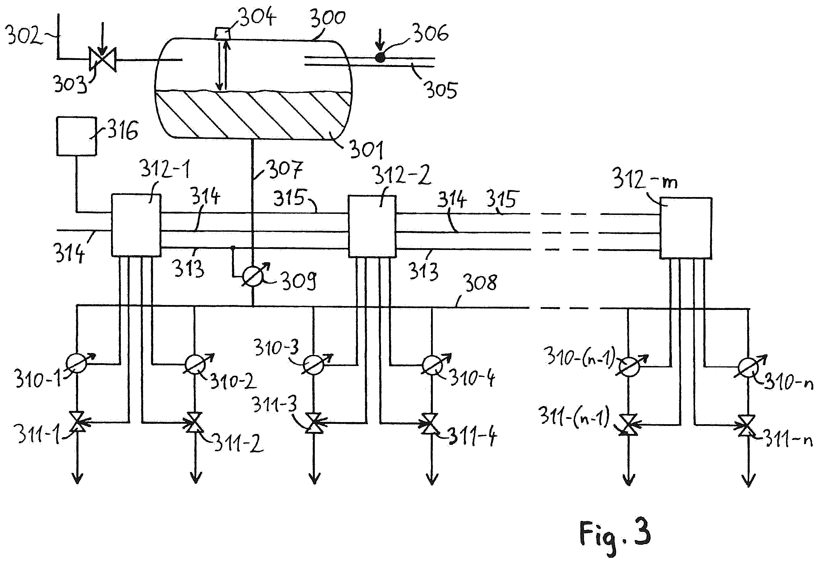

In Fig. 3 ist veranschaulicht, wie der Abfüllvorgang durch eine Mehrzahl von Steuermodulen entsprechend den Ausführungsformen der vorliegenden Erfindung gesteuert wird. Hierzu ist in Fig. 3 eine Abfüllanlage gezeigt, bei der der zur Abfüllung erforderliche Druck im Medium durch eine Beaufschlagung mit Druckluft erzeugt wird, wie dies anhand von Fig. 1 gezeigt worden war. Die in Fig. 3 gezeigte Abfüllanlage umfasst einen Vorlagebehälter 300, der zumindest teilweise mit einem fließfähigen Medium 301 gefüllt ist. Ober eine Zuleitung 302, die durch ein Regelventil 303 gesteuert wird, kann der Vorlagebehälter 300 mit fließfähigem Medium befüllt werden. Der Füllstand im Vorlagebehälter 300 wird durch ein Füllstandsmessgerät 304 gemessen. Das fließfähige Medium 301 wird über eine Druckluftleitung 305 mit Druckluft beaufschlagt, wobei der Druck im Medium über das Druckregelventil 306 eingestellt wird. Es ist eine Druckregelung vorgesehen, die über das Druckregelventil 306 die Druckluftzufuhr so regelt, dass sich im Vorlagebehälter 300 ein gewünschter Druck ergibt. Um die in dieser Anmeldung beschriebenen diagnostischen Möglichkeiten ausschöpfen zu können, ist es jedoch häufig von Vorteil, die Drucknachregelung bei der Erfassung von Durchfluss und Druck für diagnostische Zwecke kurzfristig auszuschalten.

Der Vorlagebehälter 300 ist über eine Rohrleitung 307 mit einer zentralen Zuführleitung 308 verbunden. Die Rohrleitung 307 umfasst ein Druckmessgerät 309, das den Druck des fließfähigen Mediums ermittelt. An die zentrale Zuführleitung 308 sind n Füllstellen angeschlossen, wobei jede der n Füllstellen jeweils ein Durchflussmessgerät 310-1 bis 310-n und ein Abfüllventil 311-1 bis 311-n aufweist.

Zur Steuerung des Abfüllvorgangs sind m verschiedene Steuermodule 312-1 bis 312-m vorgesehen, wobei jedes der Steuermodule für die Steuerung des Abfüllvorgangs in zwei benachbarten Füllstellen ausgelegt ist. Das erste Steuermodul 312-1 ist dazu ausgelegt, den Abfüllvorgang in der ersten und zweiten Füllstelle zu steuern, das zweite Steuermodul 312-2 ist dazu ausgelegt, den Abfüllvorgang in der dritten und vierten Füllstelle zu steuern, etc. Das m-te Steuermodul 312-m ist dazu ausgelegt, den Abfüllvorgang in der vorletzten und letzten Füllstelle zu steuern. Jedes der m Steuermodule 312-1 bis 312-m ist mit der erforderlichen Hardware und Software ausgestattet, um den Abfüllvorgang selbsttätig steuern zu können. Die Steuermodule 312-1 bis 312-m sind also als eigenständige Steuermodule konzipiert, in denen die zur Steuerung des Abfüllvorgangs benötigten Routinen gespeichert sind.

Die Steuermodule 312-1 bis 312-m sind für eine Mehrzahl von unterschiedlichen Betriebsmodi ausgelegt, wobei in Abhängigkeit von den jeweiligen Erfordernissen der Steuerung ein passender Betriebsmodus ausgewählt wird.

Entsprechend einem ersten Betriebsmodus wird die Steuerung des Abfüllvorgangs in Abhängigkeit von Durchfluss und Druck durchgeführt. Dies soll im Folgenden am Beispiel des ersten Steuermoduls 312-1 erläutert werden. Als Eingangsgröße wird dem ersten Steuermodul 312-1 der vom Durchflussmessgerät 310-1 erfasste Durchfluss in der ersten Füllstelle zugeführt. Außerdem wird dem ersten Steuermodul 310-1 der vom Durchflussmessgerät 310-2 ermittelte Durchfluss in der zweiten Füllstelle zugeführt. Als weitere Eingangsgröße wird dem ersten Steuermodul 312-1 über die Signalleitung 313 der vom Druckmessgerät 309 erfasste Druck des fließfähigen Mediums zugeführt.

Als Eingangsgrößen stehen dem Steuermodul 312-1 also der Durchfluss als Funktion der Zeit für jede der beiden Füllstellen sowie der Druck als Funktion der Zeit in Echtzeit zur Verfügung. Die Kurve von Durchfluss versus Zeit wird auch als "Füllkennlinie" bezeichnet. Ausgehend vom Durchfluss als Funktion der Zeit und vom Druck als Funktion der Zeit erzeugt das Steuermodul 312-1 für jedes der beiden Abfüllventile 311-1, 311-2 ein geeignetes Steuersignal, welches das Öffnen und Schließen des jeweiligen Abfüllventils während eines Abfüllzyklus steuert. Die vom Steuermodul 312-1 erzeugten Steuersignale werden zu den beiden Abfüllventilen 311-1 und 311-2 übermittelt.

Bei der Erzeugung der Steuersignale kann zusätzlich eine empirisch ermittelte Nachlaufmengenkorrektur vorgesehen werden. Mittels der Nachlaufmengenkorrektur wird diejenige Menge an fließfähigem Medium erfasst, die nach dem Befehl zum Schließen des Ventils noch aus der Füllstelle herausläuft.

Durch Analyse der Eingangsgrößen ist das Steuermodul 312-1 auch in der Lage, Abweichungen vom Sollverhalten beim Abfüllvorgang zu erkennen. Dadurch kann das Steuermodul 312-1 anhand der Eingangsgrößen, insbesondere anhand des Verlaufs von Durchfluss und Druck, typische Fehlerbilder und Störungen erkennen.

In Fig. 3 ist darüber hinaus eine Betriebsspannungsversorgungsleitung 314 mit eingezeichnet, welche die Steuermodule 312-1 bis 312-m mit der benötigten Betriebsspannung versorgt. Zur Anbindung an einen gemeinsamen Feldbus sind die Steuermodule 312-1 bis 312-m jeweils mit einer Feldbusschnittstelle ausgestattet. Über diese Feldbusschnittstelle sind die Steuermodule 312-1 bis 312-m an einen gemeinsamen Feldbus 315 angeschlossen, beispielsweise an einen Feldbus gemäß einem der Standards Profibus, Fieldbus Foundation, HART, etc. An den Feldbus 315 kann darüber hinaus eine Maschinensteuerung 316 angeschlossen sein, die als Master fungiert. Daten und Informationen zu den verschiedenen Abfüllvorgängen werden von den Steuermodulen 312-1 bis 312-m zur Maschinensteuerung 316 übermittelt. Die Maschinensteuerung 316 ist für die übergeordnete Steuerung und Koordination der Abläufe in der Abfüllanlage zuständig. Außerdem kann von der Maschinensteuerung 316 aus eine Parametrierung und Konfigurierung der Steuermodule 312-1 bis 312-m durchgeführt werden, damit die Parametrierung und Konfigurierung der Steuermodule 312-1 bis 312-m an den jeweiligen Abfüllvorgang und das jeweilige fließfähige Medium angepasst werden kann.

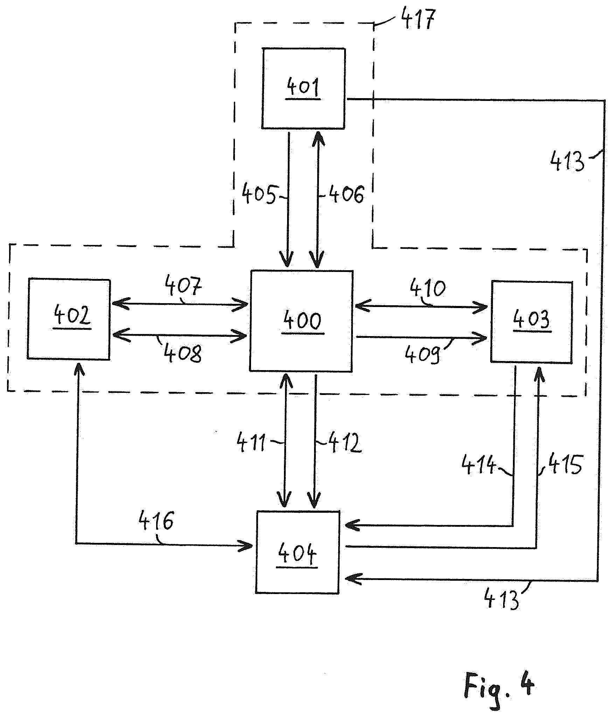

Fig. 4 zeigt ein System zur Steuerung einer Abfüllanlage entsprechend den Ausführungsformen der vorliegenden Erfindung. Zur Steuerung des Abfüllvorgangs sind ein oder mehrere Steuermodule vorgesehen, die den in Fig. 3 gezeigten Steuermodulen 312-1 bis 312-m entsprechen. Ein derartiges Steuermodul 400 ist in Fig. 4 gezeigt. An das Steuermodul 400 sind Sensoren 401 angeschlossen, die an verschiedenen Stellen der Abfüllanlage Daten zum Ablauf des Abfüllvorgangs erfassen. Die Sensoren 401 umfassen beispielsweise Durchflussmessgeräte, die den Durchfluss durch eine jeweilige Füllstelle erfassen, Druckmessgeräte, die den Druck im Vorlagebehälter oder in der Zuführleitung erfassen, Füllstandsmessgeräte zur Ermittlung des Füllstands im Vorlagebehälter, sowie beliebige weitere Messgeräte.

Darüber hinaus ist das Steuermodul 400 mit einer Speichereinrichtung 402 verbunden, die dazu ausgelegt ist, Messwerte und Messkurven in Echtzeit abzuspeichern. Bei der Speichereinrichtung 402 kann es sich beispielsweise um eine für entsprechende Datenvolumina geeignete Speicherhardware handeln. Alternativ dazu ist es möglich, die abzuspeichernden Datenströme entsprechend den Grundsätzen des Cloud-Computings in die Cloud zu schreiben, was bedeutet, dass die abzuspeichernden Daten über entsprechend breitbandige Internetverbindungen an einen Webserver übermittelt und dort gespeichert werden. Ein derartiger Ansatz, bei dem die Daten nicht in einem lokalen Speichermedium, sondern in der Cloud gespeichert werden, ermöglicht den Verzicht auf lokale Speichermedien am Ort der Abfüllanlage. Darüber hinaus können in der Cloud die Messdaten von verschiedenen Steuermodulen zusammengeführt werden.

An das Steuermodul 400 sind darüber hinaus Aktoren 403 angeschlossen, die durch das Steuermodul 400 gesteuert werden. Die Aktoren 403 können beispielsweise Ventile sowie beliebige andere Stellglieder umfassen.

Darüber hinaus umfasst das System zur Steuerung der Abfüllanlage eine Maschinensteuerung 404, die für die Steuerung der gesamten Abfüllanlage zuständig ist. Die Maschinensteuerung 404 ist dazu ausgelegt, die gesamten Abläufe in der Abfüllanlage zu koordinieren. Hierzu unterhält die Maschinensteuerung 404 Datenverbindungen zu sämtlichen Steuermodulen der Abfüllanlage. Die Maschinensteuerung 404 steht daher im Datenaustausch mit dem Steuermodul 400.

Im Folgenden wird die Funktionsweise des in Fig. 4 gezeigten Systems zur Steuerung einer Abfüllanlage näher erläutert.

Bei den Sensoren 401 handelt es sich in der Regel um Feldgeräte, welche zur Erfassung von prozessrelevanten Größen wie beispielsweise Durchfluss durch die jeweilige Füllstelle, Druck, Temperatur, etc. ausgelegt sind. Die jeweilige Messgröße wird vom Sensor zunächst in ein Analogsignal umgesetzt. Dieses Analogsignal wird anschließend durch den Sensor in ein digitales Signal umgewandelt und gegebenenfalls in ein normiertes Signal umgesetzt. Das so erhaltene verarbeitete Signal wird dem Steuermodul 400 zugeführt. Dies ist in Fig. 4 durch den Pfeil 405 dargestellt. Zusätzlich zu den Messwerten können zwischen den Sensoren 401 und dem Steuermodul 400 noch weitere Daten ausgetauscht werden. Dies ist in Fig. 4 durch den Doppelpfeil 406 veranschaulicht. Beispielsweise können Diagnosedaten zum aktuellen Zustand der Sensoren von den Sensoren 401 zum Steuermodul 400 übertragen werden. Dies ermöglicht auf Seiten des Steuermoduls 400 eine Überwachung des Zustands der Sensoren (sogenanntes Condition Monitoring). In umgekehrter Richtung können Parameter vom Steuermodul 400 zu den Sensoren 401 übertragen werden, um die Sensoren 401 vom Steuermodul 400 aus geeignet zu parametrieren. Mittels einer derartigen Fernparametrierung können die Sensoren 401 vom Steuermodul 400 aus an die aktuellen Betriebsbedingungen der Abfüllanlage angepasst werden.

Die Datenübertragung zwischen den Sensoren 401 und dem Steuermodul 400 sollte vorzugsweise so ausgelegt werden, dass die Messdaten dem Steuermodul 400 in Echtzeit zur Verfügung gestellt werden. Die Datenverbindung sollte also eine hinreichend kurze Latenzzeit aufweisen, um Echtzeitanforderungen erfüllen zu können. Beispielsweise können als Sensoren 401 Feldgeräte eingesetzt werden, die mittels eines für Echtzeitanforderungen geeigneten Feldbusses mit dem Steuermodul 400 verbunden sind. Als Feldbusprotokolle, welche die Erfüllung von Echtzeitanforderungen ermöglichen, kommen insbesondere verschiedene Industrial Ethernet-Protokolle in Frage. Beispielweise eignen sich die Industrial Ethernet-Protokolle PROFINET IRT, Powerlink, EtherCAT sowie SERCOS III für eine Datenübermittlung mit Zykluszeiten unterhalb einer Millisekunde. Insofern ermöglichen die genannten Industrial Ethernet-Protokolle, die Anforderungen von "harter Echtzeit" zu erfüllen. Darüber hinaus gibt es weitere Industrial Ethernet-Protokolle wie beispielsweise EtherNet/IP oder auch PROFINET RT, die Latenzzeiten von weniger als 10 ms ermöglichen. Derartige Protokolle eignen sich zur Erfüllung der Anforderungen von "weicher Echtzeit".

Mit Hilfe der genannten Protokolle können die mehr oder weniger stark vorverarbeiteten Messdaten dem Steuermodul 400 in Echtzeit zur Verfügung gestellt werden. Auf Seiten des Steuermoduls 400 können die Messdaten weiterverarbeitet werden. Außerdem können die Messdaten über eine ausreichend schnelle Datenverbindung in Echtzeit zur Speichereinrichtung 402 übertragen und dort abgespeichert werden. In umgekehrter Richtung können Messdaten, die in der Speichereinrichtung 402 gespeichert sind, zum Steuermodul 400 übertragen werden, beispielsweise um einen Vergleich mit aktuell erfassten Messdaten durchzuführen. Der bidirektionale Austausch von Messdaten zwischen dem Steuermodul 400 und der Speichereinrichtung 402 ist in Fig. 4 durch den Doppelpfeil 407 dargestellt.

Darüber hinaus können zwischen dem Steuermodul 400 und der Speichereinrichtung 402 Betriebsparameter ausgetauscht werden, wie dies durch den Doppelpfeil 408 dargestellt ist. Beispielsweise können Parameter zu Speicherbelegung und Speicherressourcen von der Speichereinrichtung 402 zum Steuermodul 400 übermittelt werden. Darüber hinaus kann die Art und Weise, wie die Messdaten auf Seiten der Speichereinrichtung 402 gespeichert werden, mittels Fernparametrierung vom Steuermodul 400 aus festgelegt werden.

Vorzugsweise werden die abzuspeichernden Messdaten über eine hinreichend schnelle Internetverbindung oder Ethernetverbindung in die Cloud geschrieben, also zu einem Webserver übertragen und dort abgespeichert.

Das Steuermodul 400 ist dazu ausgelegt, die von den Sensoren 401 erfassten Messdaten in Echtzeit auszuwerten und eventuelle Anomalien beim Abfüllvorgang sofort zu erkennen. Hierzu können die ermittelten Messwerte und Messkurven in Echtzeit mit früher erfassten Messwerten und Messkurven verglichen werden. Auf diese Weise lassen sich Veränderungen beim Abfüllvorgang verfolgen. Dies ermöglicht einen Rückschluss auf aktuelle Vorgänge in der Abfüllanlage. Das Steuermodul 400 kann außerdem auf Veränderungen reagieren, indem beispielsweise die Parametrierung an den veränderten Betriebszustand angepasst wird. Wenn dagegen schwerwiegende Anomalien festgestellt werden, beispielsweise ein völlig fehlerhafter Abfüllvorgang, dann kann es notwendig sein, den Abfüllvorgang abzubrechen.

Alternativ oder zusätzlich zum Verfolgen der Veränderungen beim Abfüllvorgang kann das Steuermodul 400 die aktuell erfassten Messwerte und Messkurven mit vorher festgelegten Referenzwerten und Referenzkurven vergleichen und in Echtzeit feststellen, ob sich die Abweichungen gegenüber den Referenzwerten innerhalb eines festgelegten Toleranzbereiches bewegen. Durch den Vergleich mit Referenzwerten und Referenzkurven ist es möglich, Anomalien zu erkennen und darauf zu reagieren.

Zusätzlich zur Überwachung der Messwerte und Messkurven ist das Steuermodul 400 dazu ausgelegt, aus den erfassten Messwerten und Messkurven Schalt- und Stellsignale für die Aktoren 403 abzuleiten. Beispielsweise kann das Steuermodul 400 dazu ausgelegt sein, aus dem Verlauf des Durchflusses durch eine Füllstelle den Befehl zum Schließen des Füllventils abzuleiten und zum Füllventil zu übermitteln. Die Schalt- und Stellsignale, die vom Steuermodul 400 zu den Aktoren 403 übermittelt werden, sind in Fig. 4 als Pfeil 409 eingezeichnet. Zusätzlich zu den Schalt- und Stellsignalen können Parameter zur Parametrierung der Aktoren 403 vom Steuermodul 400 zu den Aktoren 403 übermittelt werden. In umgekehrter Richtung können die Aktoren 403 Diagnosedaten zu ihrem aktuellen Betriebszustand an das Steuermodul 400 übermitteln. Dieser Austausch von Parametern und Diagnosedaten zwischen dem Steuermodul 400 und den Aktoren 403 ist in Fig. 4 durch den Doppelpfeil 410 dargestellt.

Den Aktoren 403, also die Ventile und sonstigen Stellglieder der Abfüllanlage, können als Feldgeräte ausgebildet sein. In diesem Fall werden die Aktoren 403 mittels eines geeigneten Feldbusses an das Steuermodul 400 angeschlossen. Dabei sollte der verwendete Feldbus für Echtzeitanforderungen geeignet sein, damit die vom Steuermodul 400 erzeugten Schalt- und Stellsignale mit ausreichend kurzer Latenzzeit zu den Aktoren 403 übermittelt werden können. Als Feldbusse zur Anbindung der Aktoren 403 eignen sich Industrial Ethernet-Protokolle wie beispielsweise PROFINET IRT, Powerlink, EtherCAT oder SERCOS III, welche Echtzeitanforderungen erfüllen können.

Allerdings sind viele der Aktoren 403 in einer Abfüllanlage nicht als Feldgeräte ausgelegt. In diesem Fall werden die Aktoren 403 über Datenleitungen an die digitalen Ausgänge des Steuermoduls 400 angeschlossen. Auch dabei ist darauf zu achten, dass die Signallaufzeiten der vom Steuermodul 400 zu den Aktoren 403 übertragenen Signale hinreichend kurz sind, um Echtzeitanforderungen erfüllen zu können. Anhand von Fig. 3 ist beispielsweise erkennbar, dass durch den Einsatz einer Mehrzahl von dezentralen Steuermodulen 312-1 bis 312-m kurze Übertragungswege und somit auch kurze Signallaufzeiten ermöglicht werden.

Die Maschinensteuerung 404 ist für die übergeordnete Steuerung der gesamten Abfüllanlage zuständig. Hierzu ist die Maschinensteuerung 404 mit sämtlichen Steuermodulen der Abfüllanlage verbunden. Beispielsweise ist bei der in Fig. 3 gezeigten Abfüllanlage die Maschinensteuerung 316 mit den m Steuermodulen 312-1 bis 312-m verbunden. Von sämtlichen Steuermodulen erhält die Maschinensteuerung Informationen über den aktuellen Betriebszustand. Basierend auf diesen Informationen koordiniert die Maschinensteuerung die Abläufe in der gesamten Abfüllanlage.

Der Informationsfluss zwischen der Maschinensteuerung 404 und den restlichen Komponenten des Steuerungssystems ist in Fig. 4 dargestellt. Das Steuermodul 400 übermittelt an die Maschinensteuerung 404 beispielsweise Informationen zu den erfassten Messwerten, Diagnosedaten betreffend die Sensoren 401 sowie die Aktoren 403, Informationen zur Parametrierung der Sensoren 401 sowie der Aktoren 403, etc. In umgekehrter Richtung übermittelt die Maschinensteuerung 404 zum Steuermodul 400 Informationen zum allgemeinen Betriebszustand der Abfüllanlage sowie zum Betriebszustand der anderen Steuermodule. Dieser wechselseitige Informationsaustausch zwischen dem Steuermodul 400 und der Maschinensteuerung 404 ist durch den Doppelpfeil 411 dargestellt.

Die vom Steuermodul 400 erzeugten Schalt- und Stellsignale werden nicht nur an die Aktoren 403 übermittelt, sondern darüber hinaus auch an die Maschinensteuerung 404. Dies ist in Fig. 4 durch den Pfeil 412 dargestellt.

Für die Datenübertragung zwischen dem Steuermodul 400 und der Maschinensteuerung 404 ist es nicht erforderlich, dass Echtzeitanforderungen erfüllt werden. Insofern kann die Datenübertragung zwischen dem Steuermodul 400 und der Maschinensteuerung 404 mittels eines herkömmlichen Feldbusses wie beispielsweise Profibus, Fieldbus Foundation, HART realisiert werden. Alternativ dazu können Industrial Ethernet-Protokolle für die Datenübertragung zwischen dem Steuermodul 400 und der Maschinensteuerung 404 eingesetzt werden.

Die Maschinensteuerung 404 kann darüber hinaus unmittelbar Daten von den Sensoren 401 empfangen, beispielsweise Messdaten und Diagnoseinformationen. Dies ist in Fig. 4 durch den Pfeil 413 dargestellt. Die Datenverbindung zwischen den Sensoren 401 und der Maschinensteuerung 404 wird dabei vorzugsweise mittels eines Feldbusses realisiert, welcher jedoch keine Echtzeitanforderungen erfüllen muss.

Darüber hinaus kann eine unmittelbare Datenverbindung zwischen den Aktoren 403 und der Maschinensteuerung 404 vorgesehen sein. Falls es sich bei dem jeweiligen Aktor um ein Feldgerät handelt, kann die Datenverbindung in Form eines Feldbusses realisiert sein. Viele Aktoren sind jedoch nicht als Feldgeräte ausgelegt. Derartige Aktoren können mittels einer Datenleitung mit der Maschinensteuerung 404 verbunden werden. Über die Datenverbindung zwischen dem jeweiligen Aktor und der Maschinensteuerung 404 können beispielsweise Diagnosedaten zur Maschinensteuerung 404 übermittelt werden. Dies ist in Fig. 4 durch den Pfeil 414 dargestellt. In umgekehrter Richtung kann die Maschinensteuerung 404 Schalt- und Stellsignale an die Aktoren 403 übermitteln, wie dies durch den Pfeil 415 dargestellt ist. Auf Seiten der Maschinensteuerung 404 stehen Daten über die Abläufe in der gesamten Abfüllanlage zur Verfügung. Durch die Übermittlung von Schalt- und Stellsignalen an Aktoren 403 der gesamten Abfüllanlage kann die Maschinensteuerung 404 unmittelbar in die Abläufe der Abfüllanlage eingreifen, beispielsweise um eine fehlerhafte Abfüllung zu stoppen.

Auch zwischen der Speichereinrichtung 402 und der Maschinensteuerung 404 kann ein unmittelbarer Datenaustausch vorgesehen sein, um einen maschinenrelevanten Signalaustausch zwischen der Speichereinrichtung 402 und der Maschinensteuerung 404 zu ermöglichen. Dieser Signalaustausch ist durch den Doppelpfeil 416 dargestellt. Die Datenverbindung zwischen der Speichereinrichtung 402 und der Maschinensteuerung 404 muss jedoch keine Echtzeitanforderungen erfüllen.

Bei der in Fig. 4 gezeigten Systemsteuerung ist der gestrichelt eingezeichnete Bereich 417 durch eine Datenübertragung in Echtzeit gekennzeichnet. Dies bedeutet, dass die Daten mit einer Latenzzeit von beispielsweise ca. 1 ms und weniger übertragen werden. Technologisch wird dies durch den Einsatz moderner Industrial Ethernet-Protokolle wie beispielsweise PROFINET IRT, Powerlink, EtherCAT, SERCOS III, etc. ermöglicht. Des weiteren ist für den in Echtzeit arbeitenden Bereich 417 des Steuerungssystems charakteristisch, dass die anfallenden Datenmengen in Echtzeit weggeschrieben und abgespeichert werden können, beispielsweise durch Übertragung der Daten an die Cloud. Dadurch wird das Erfassen, Verarbeiten und Abspeichern großer Datenmengen ermöglicht.

Durch die geringe Zykluszeit innerhalb des Bereichs 417 können die Messwerte in kurzem zeitlichem Abstand aufgezeichnet werden, so dass der Messwertverlauf genauer als bisher erfasst werden kann. Anstatt einzelner Messwerte werden Messkurven erfasst und zur Speichereinheit 402 weggeschrieben.

Die große Menge an erfassten Messdaten bietet eine Vielzahl von Analysemöglichkeiten zum Verfolgen der Vorgänge in der Abfüllanlage. Eine Vielzahl von Störungen, Fehlern, Verschleiß- und Abnutzungserscheinungen in der Abfüllanlage kann durch eine genaue Auswertung des erfassten Datenmaterials frühzeitig erkannt werden. Dadurch werden eine frühzeitige Fehlererkennung sowie eine vorausschauende Wartung ermöglicht.

Innerhalb des gestrichelt eingezeichneten Bereichs 417 werden die von den Sensoren 401 gelieferten Messdaten vom Steuermodul 400 in Echtzeit erfasst und verarbeitet. Die Messdaten werden in deutlich verbesserter Auflösung und mit höherer Genauigkeit erfasst. Die erfassten Messkurven dienen dem Steuermodul 400 als Ausgangspunkt für die Erzeugung von Schalt- und Stellsignalen für die Aktoren 403. Die verbesserte Genauigkeit bei der Erfassung der Messkurven führt zu einer verbesserten Genauigkeit der daraus abgeleiteten Schalt- und Stellsignale für die Aktoren 403. Insbesondere werden auch die Befehle zum Öffnen und Schließen des Füllventils mit höherer zeitlicher Präzision erzeugt. Dadurch wird die Genauigkeit der Abfüllung verbessert.

Dagegen können im restlichen Teil der Systemsteuerung und insbesondere in der übergeordneten Maschinensteuerung 404 deutlich langsamere Zykluszeiten eingesetzt werden, welche sich beispielsweise im Bereich von 10 ms bewegen können. Da im Bereich der Maschinensteuerung 404 keine Echtzeitanforderungen zu erfüllen sind, können hier die bisherigen Technologien weiter verwendet werden. Dies bedeutet, dass bereits vorhandene Maschinensteuerungen sowie herkömmliche Feldbusverbindungen, wie beispielsweise Profibus und Fieldbus Foundation, hier weiter verwendet werden können. Dadurch wird die Möglichkeit geschaffen, die bereits existierende Technologie für Abfüllanlagen um Bereiche 417 zu erweitern, welche für Echtzeitanforderungen ausgelegt sind. Durch die geschickte Kombination von Bereichen 417 mit geringer Zykluszeit im Bereich von beispielsweise 1 ms und Bereichen mit längerer Zykluszeit im Bereich von beispielsweise 10 ms können sehr leistungsfähige Systeme realisiert werden. Hierzu ist keine vollständige Ersetzung der bisher verwendeten Technologien erforderlich, sondern lediglich eine Ergänzung.

Im Folgenden soll beispielhaft ein erster Betriebsmodus des Steuermoduls 400 diskutiert werden, bei dem der Durchfluss durch die Füllstelle sowie der Druckverlauf als Funktion der Zeit erfasst und als Grundlage für die Steuerung des Abfüllventils verwendet werden.

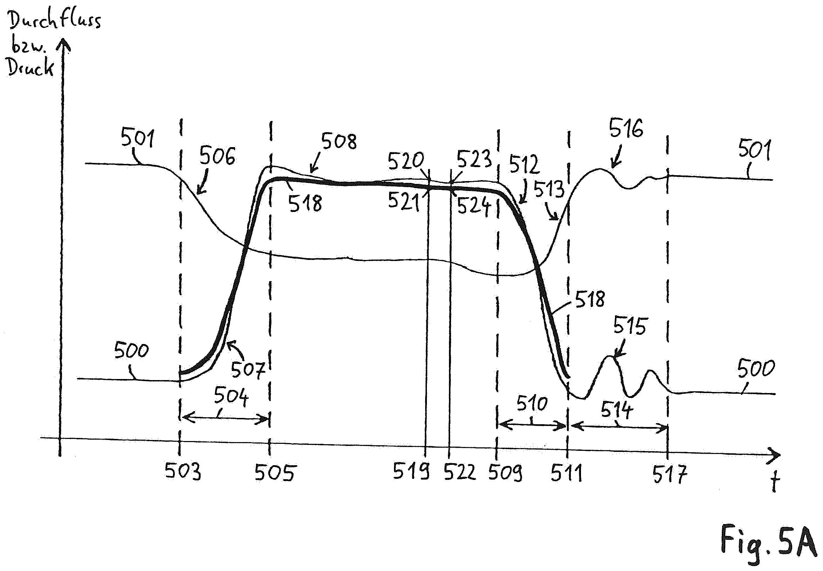

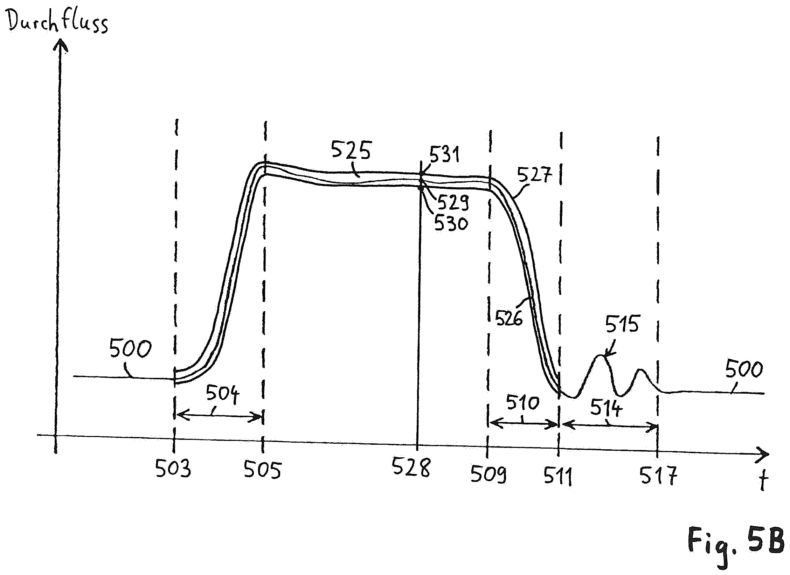

In Fig. 5A und 5B sind zwei verschiedene Möglichkeiten gezeigt, wie der vom Durchflussmessgerät erfasste Durchfluss als Funktion der Zeit, die sogenannte Füllkennlinie, während des Abfüllvorgangs in Echtzeit überprüft werden kann.

Fig. 5A zeigt eine erste Möglichkeit zur Überwachung der Füllkennlinie. In dem in Fig. 5A gezeigten Diagramm sind sowohl eine Füllkennlinie 500 als auch ein Druckverlauf 501 für einen Abfüllzyklus gezeigt. Die Füllkennlinie 500 zeigt den vom Durchflussmessgerät der jeweiligen Füllstelle erfassten Durchfluss als Funktion der Zeit. Dabei wird der Durchfluss des fließfähigen Mediums als Volumen pro Zeiteinheit angegeben. Der Druckverlauf 501 zeigt den Druck des fließfähigen Mediums als Funktion der Zeit. Auf der Hochachse des in Fig. 5A gezeigten Diagramms sind der Druck bzw. der Durchfluss aufgetragen, wohingegen auf der Rechtsachse die Zeit aufgetragen ist.

Der Abfüllvorgang beginnt zum Zeitpunkt 503 mit dem Befehl zum Öffnen des Abfüllventils. Bei dem Abfüllventil handelt es sich in der Regel um ein Membranventil. Das Öffnen des Abfüllventils nimmt eine gewisse Zeitspanne 504 in Anspruch, so dass das Abfüllventil erst zum Zeitpunkt 505 vollständig geöffnet ist. Durch das Öffnen des Abfüllventils kommt es zuerst zu einer Druckverringerung 506 im fließfähigen Medium. Außerdem beginnt sich das in den Rohrleitungen befindliche fließfähige Medium in Bewegung zu setzen. Daher ist etwas phasenversetzt zur Druckverringerung 506 ein Anstieg 507 im Durchfluss zu erkennen, und das in der Füllleitung enthaltene fließfähige Medium beginnt zu fließen.

Ab dem Zeitpunkt 505 wird das fließfähige Medium mit einem im Wesentlichen konstanten Durchfluss 508 in den jeweiligen Behälter abgefüllt. Während des Abfüllvorgangs ist der Druck im fließfähigen Medium etwas niedriger als vor dem Öffnen des Abfüllventils.

Der Befehl zum Schließen des Abfüllventils erfolgt zum Zeitpunkt 509. Nach dem Befehl zum Schließen des Abfüllventils dauert es eine gewisse Zeitspanne 510, bis das Abfüllventil tatsächlich geschlossen ist. Erst zum Zeitpunkt 511 ist das Abfüllventil dann vollständig geschlossen. Durch das Schließen des Abfüllventils kommt es zuerst zu einem Durchflussabfall 512; der Durchfluss des fließfähigen Mediums durch das Abfüllventil wird gestoppt. Etwas phasenverzögert zum Durchflussabfall 512 steigt der Druck im fließfähigen Medium wieder an, es kommt zu einem Druckanstieg 513.

Allerdings treten auch nach dem Schließen des Abfüllventils während der Zeitspanne 514 noch Schwankungen 515 im Durchfluss sowie entsprechende Schwankungen 516 im Druck auf, die durch ein Nachschwingen des fließfähigen Mediums hervorgerufen werden. Erst zum Zeitpunkt 517 ist der Durchfluss wirklich gleich Null.

Anhand von Fig. 5A ist erkennbar, dass der Durchfluss und der Druckverlauf während eines Abfüllzyklus stark miteinander korreliert sind. Der Verlauf des Durchflusses und der Verlauf des Drucks im Medium werden zusammen in Echtzeit erfasst und gemeinsam ausgewertet. Dabei kann zunächst bestimmt werden, ob sich die Füllkennlinie 500 und der Druckverlauf 501 im Rahmen des zu erwartenden Verhaltens bewegen oder ob die Abweichungen der Füllkennlinie 500 und des Druckverlaufs 501 von einer Sollkennlinie bzw. einem Solldruckverlauf zu stark sind. Zusätzlich dazu können anhand der Füllkennlinie 500 und des Druckverlaufs 501 typische Fehlerbilder beim Abfüllvorgang erkannt werden, wie sie typischerweise während der Abfüllung eines fließfähigen Mediums auftreten können.

In Fig. 5A wird zur Überprüfung des Verlaufs der Füllkennlinie 500 ein vorgegebener Sollverlauf 518 verwendet. Durch Vergleichen der Füllkennlinie 500 mit dem Sollverlauf 518 wird ermittelt, ob die Füllkennlinie 500 dem gewünschten Sollverlauf 518 entspricht oder ob es signifikante Abweichungen vom Sollverlauf 518 gibt. Falls es zu signifikanten Abweichungen zwischen der Füllkennlinie 500 und dem Sollverlauf 518 kommt, liegt eine Anomalie vor, die beispielsweise durch eine Störung verursacht sein kann.

Der Sollverlauf 518 wird vorgegeben. Als Sollverlauf 518 kann beispielsweise ein Referenzverlauf verwendet werden, der vorab im Rahmen einer Referenzmessung für die jeweilige Füllstelle gemessen wird und dann abgespeichert wird. Alternativ dazu kann die Füllkennlinie eines früher durchgeführten Abfüllvorgangs als Sollverlauf 518 verwendet werden.

Zur Überprüfung der aktuell ermittelten Füllkennlinie 500 wird die Füllkennlinie 500 mit dem Sollverlauf 518 verglichen. Entsprechend den Ausführungsformen der vorliegenden Erfindung wird der Durchfluss durch die Füllstelle in kurzen Zeitabständen in Echtzeit erfasst. Beispielsweise wird der Durchfluss durch eine Füllstelle jeweils im Abstand von 0,5 Millisekunden bis 5 Millisekunden erfasst. Für jeden Durchfluss-Messwert wird die Differenz zwischen dem erfasstem Durchfluss-Messwert und dem zugehörigen Durchflusswert des Sollverlaufs 518 bestimmt. Anschließend kann beispielsweise geprüft werden, ob diese Differenz einen vorgegebenen Schwellwert überschreitet oder nicht.

Beispielsweise wird zum Zeitpunkt 519 die Differenz zwischen dem in Echtzeit erfassten Durchfluss-Messwert 520 und dem zugehörigen Durchflusswert 521 des Sollverlaufs 518 ermittelt, und es wird geprüft, ob diese Differenz unterhalb eines vorgegebenen Schwellwerts liegt. Ebenso wird zum Zeitpunkt 522 die Differenz zwischen dem in Echtzeit erfassten Durchfluss-Messwert 523 und dem zugehörigen Durchflusswert 524 des Sollverlaufs 518 ermittelt. Wieder wird geprüft, ob diese Differenz unterhalb eines vorgegebenen Schwellwerts liegt. Auf diese Weise kann in Echtzeit überprüft werden, ob die aktuelle Füllkennlinie 500 hinreichend nah am vorgegebenen Sollverlauf 518 liegt oder nicht.

In Fig. 5B ist nochmals die Füllkennlinie 500 als Funktion der Zeit dargestellt. Im Unterschied zu Fig. 5A wird bei der in Fig. 5B gezeigten Ausführungsform mittels eines vorgegebenen Toleranzbands 525 überprüft, ob die aktuell erfasste Füllkennlinie 500 dem Sollverlauf entspricht oder nicht. Solange die Füllkennlinie 500 innerhalb des Toleranzbandes 525 verläuft, entspricht der Abfüllvorgang dem Sollverlauf. Sobald die Füllkennlinie aus dem Toleranzband 525 ausbricht, liegt eine Anomalie vor.

Das Toleranzband 525 kann sich beispielweise über das gesamte Zeitintervall zwischen dem Zeitpunkt 503 und dem Zeitpunkt 511 erstrecken, das Toleranzband 525 kann sich aber auch nur über einen Teilabschnitt dieses Zeitintervalls erstrecken, beispielsweise nur den Durchflussabfall zwischen den Zeitpunkten 509 und 511 abdecken. Das Toleranzband 525 wird vorab vorgegeben. Beispielsweise kann das Toleranzband 525 aus einem Referenzverlauf abgeleitet werden, der vorab mittels einer Referenzmessung für die jeweilige Füllstelle gemessen wird.

Zur Überprüfung der aktuell ermittelten Füllkennlinie 500 wird ermittelt, ob die Füllkennlinie 500 innerhalb des Toleranzbandes 525 liegt. Für jeden Durchfluss-Messwert wird überprüft, ob er oberhalb der Untergrenze 526 des Toleranzbands 525 liegt und zugleich unterhalb der Obergrenze 527 des Toleranzbands 525 liegt. Diese Überprüfung wird in Echtzeit vorgenommen.

Beispielsweise wird zum Zeitpunkt 528 ermittelt, ob der Durchfluss-Messwert 529 größer ist als der zugehörige Durchflusswert 530 an der Untergrenze 526 des Toleranzbandes 525 und ob der Durchfluss-Messwert 529 kleiner ist als der zugehörige Durchflusswert 531 an der Obergrenze 527 des Toleranzbands 525.

Anhand der Füllkennlinie und des Druckverlaufs können typische Fehlerbilder beim Abfüllvorgang erkannt werden, wie sie typischerweise während der Abfüllung eines fließfähigen Mediums auftreten können. Anhand charakteristischer Abweichungen zwischen dem gemessenen und dem idealen Verlauf von Durchfluss und Druck kann auf die Art des zugrunde liegenden Fehlers zurückgeschlossen werden. Darüber hinaus sind bestimmte Fehler, beispielsweise ein Verschleiß des Membranventils, bereits zu einem sehr frühen Zeitpunkt aus dem Verlauf der Füllkennlinie und des Druckverlaufs herauslesbar. Insofern können die Füllkennlinie und der Druckverlauf auch zu einer Frühdiagnose von Fehlern und Verschleiß herangezogen werden, die erst in Zukunft zu signifikanten Störungen führen würden.

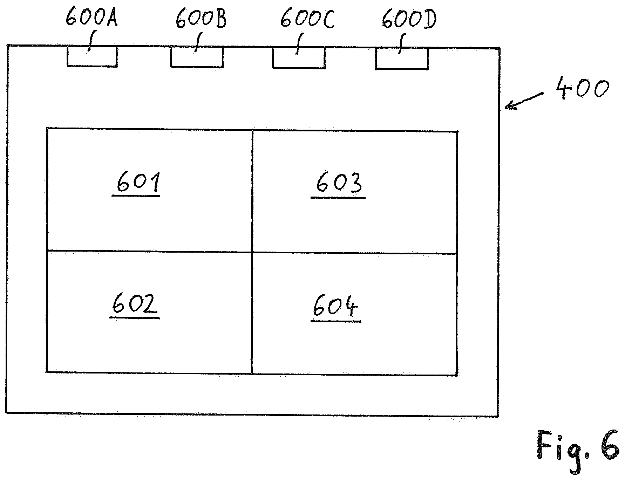

In Fig. 6 ist eine Ausführungsform des Steuermoduls 400 schematisch dargestellt. Das Steuermodul weist eine Mehrzahl von Schnittstellen 600A, 600B, 600C, 600D auf, über die das Steuermodul 400 Daten mit den anderen Komponenten des Steuerungssystems austauschen kann. Über die Schnittstellen 600A bis 600D können beispielsweise Datenverbindungen zu den Sensoren 401, zu der Speichereinrichtung 402, zu den Aktoren 403 und zu der Maschinensteuerung 404 hergestellt werden, wie dies in Fig. 4 gezeigt ist. Hierzu können die Schnittstellen 600A bis 600D beispielsweise Schnittstellen für einen Industrial Ethernet-Feldbus, Schnittstellen für einen konventionellen Feldbus, eine Ethernet-Anbindung sowie weitere digitale Schnittstellen umfassen.

Entsprechend der in Fig. 6 gezeigten Ausführungsform kann das Steuermodul 400 für unterschiedliche Füllverfahren eingesetzt werden. Hierzu sind auf dem Steuermodul 400 vier unterschiedliche Betriebsmodule 601, 602, 603, 604 vorgesehen, wobei jedes der vier Betriebsmodule 601, 602, 603, 604 zur Realisierung eines anderen Füllverfahrens ausgelegt ist. Der Benutzer kann daher durch Aktivieren des passenden Betriebsmoduls das Füllverfahren auswählen, das zu der verwendeten Abfüllanlage und zu den jeweiligen Anforderungen passt. Dies bedeutet, dass der Benutzer durch Auswahl und Aktivierung von einem oder mehreren der verfügbaren Betriebsmodule 601 bis 604 das Füllverfahren bzw. die Füllverfahren für die jeweilige Abfüllanlage festlegen kann.

Im Folgenden werden beispielhaft vier mögliche Füllverfahren erläutert, die von den Betriebsmodulen 601 bis 604 des Steuermoduls 400 unterstützt werden.

Bei dem ersten Füllverfahren, das mittels des Betriebsmoduls 601 realisiert ist, erfolgt die Steuerung des Abfüllvorgangs durch die Vorgabe der Zeitspanne zwischen Öffnen und Schließen des Abfüllventils und des Drucks im Medium. Das fließfähige Medium wird also während einer vorgegebenen Zeitspanne mit einem vorgegebenen Druck abgefüllt. Durch die Vorgabe der Zeitspanne und des Drucks wird das Volumen an fließfähigem Medium vorgegeben, das pro Abfüllzyklus abgefüllt wird. Durch Nachmessen des tatsächlich abgefüllten Volumens von fließfähigem Medium kann die Zeitspanne dann empirisch so korrigiert werden, dass ein gewünschtes Abfüllvolumen möglichst genau erreicht wird. Der Vorteil dieses ersten Füllverfahrens ist, dass hier auf eine Durchflussmessung verzichtet werden kann.

Bei dem zweiten Füllverfahren, das mittels des zweiten Betriebsmoduls 602 realisiert ist, wird der Abfüllvorgang in jeder Füllstelle in Abhängigkeit vom Durchfluss durch die Füllstelle und von dem Druck im Medium gesteuert. Das zweite Füllverfahren war bereits anhand der in Fig. 5A und 5B gezeigten Füllkennlinie erläutert worden. Durch die Erfassung des Durchflusses ist es möglich, das Öffnen und Schließen des Abfüllventils in Abhängigkeit von der tatsächlich geflossenen Menge an fließfähigem Medium zu steuern. Zur weiteren Steigerung der Genauigkeit kann eine empirisch ermittelte Nachlaufmengenkorrektur berücksichtigt werden, mit der die nach dem Schließen des Abfüllventils noch herauslaufende Menge an fließfähigem Medium berücksichtigt wird. Generell kann durch das Verfolgen von Durchfluss und Druck des Mediums für jede Füllstelle die tatsächlich geflossene Menge an fließfähigem Medium erfasst werden. Basierend darauf kann eine genaue Steuerung des Abfüllvorgangs erreicht werden.

Bei dem dritten Füllverfahren, das durch das Betriebsmodul 603 realisiert ist, erfolgt die Bestimmung des Abfüllvolumens mit Hilfe einer Wägevorrichtung. Das Abfüllventil wird für eine bestimmte Zeitspanne geöffnet, um eine definierte Menge an fließfähigem Medium in einen Behälter abzufüllen. Während der Abfüllung oder im Anschluss an die Abfüllung wird der befüllte Behälter gewogen. Durch das Abwiegen des befüllten Behälters wird das Volumen des fließfähigen Mediums ermittelt, das in den Behälter eingefüllt wurde. Das von der Wägevorrichtung ermittelte Gewicht des befüllten Behälters wird dem Steuermodul 400 zugeführt. Die Abfüllung wird dann in Abhängigkeit von dem Wiegesignal gesteuert. Dabei kann es von Vorteil sein, das Abfüllvolumen nur jeweils nach einer bestimmten Anzahl von Abfüllzyklen durch erneutes Abwiegen zu überprüfen. Das dritte Füllverfahren bietet den großen Vorteil, dass die tatsächlich abgefüllte Menge sehr genau ermittelt werden kann.

Bei dem vierten Füllverfahren, der mittels eines vierten Betriebsmoduls 604 realisiert ist, wird das Füllvolumen durch eine definierte mechanische Betätigung eines Kolbens oder einer Pumpe festgelegt. Durch einen definierten Kolbenvorschub bzw. eine definierte Pumpenbetätigung wird ein vorgegebenes Volumen von fließfähigem Medium in den Behälter bzw. die Flasche abgefüllt. Beispielsweise wird bei der sogenannten "Kolbenfüllertechnik" das abzufüllende Medium mittels eines definierten Vorschubs eines Kolbens geeignet dosiert. Das Betriebsmodul 604 kann dazu eingerichtet sein, eine Kolbenposition, einen Kolbenvorschub oder eine Pumpenbewegung zu überwachen und zu steuern.

Durch die Bereitstellung von unterschiedlichen Betriebsmodulen 601 bis 604 kann das Steuermodul 400 für unterschiedliche Füllverfahren eingesetzt werden und somit an die Erfordernisse und Gegebenheiten von unterschiedlichen Abfüllanlagen angepasst werden. Mittels eines derartig flexibel konfigurierbaren Steuermoduls ist es insbesondere auch möglich, die Gegebenheiten von älteren Abfüllanlagen zu berücksichtigen, bei denen beispielsweise die Abfüllung mittels Wägetechnik kontrolliert wurde oder die Kolbenfüllertechnik zur Befüllung der Behälter eingesetzt wurde.

Ein weiterer Vorteil der Bereitstellung von unterschiedlichen Betriebsmodulen für unterschiedliche Abfülltechniken ist, dass dadurch eine Vergleichbarkeit zwischen unterschiedlichen Füllverfahren ermöglicht wird.

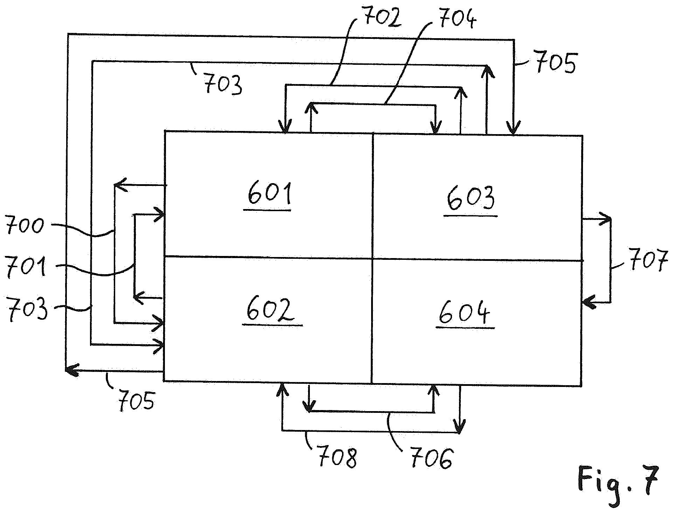

In Fig. 7 ist gezeigt, wie die Ergebnisse eines Füllverfahrens zum Abgleichen, Korrigieren und Eichen der Ergebnisse eines anderen Füllverfahrens verwendet werden können. Das Steuermodul umfasst dabei die vier bereits in Fig. 6 gezeigten Betriebsmodule 601 bis 604. Die zugehören Füllverfahren, die von den Betriebsmodulen 601 bis 604 realisiert werden, sind bereits anhand von Fig. 6 beschrieben worden.

Durch das Bereitstellen von verschiedenen Betriebsmodulen 601 bis 604 wird die Möglichkeit geschaffen, die Abfüllung eines fließfähigen Mediums mit Hilfe von unterschiedlichen Füllverfahren durchzuführen und die Ergebnisse der verschiedenen Füllverfahren miteinander zu vergleichen. Dadurch wird es beispielsweise möglich, die Ergebnisse eines Füllverfahrens zum Abgleichen und Eichen eines anderen Füllverfahrens zu nutzen. Insbesondere wird die Möglichkeit geschaffen, die Ergebnisse eines Füllverfahrens als Referenz für ein anderes Füllverfahren zu verwenden. Die Durchführung eines Quervergleichs zwischen verschiedenen Füllverfahren ermöglicht ein genaueres Abfüllergebnis.

Beispielsweise kann das Abfüllergebnis, das vom ersten Betriebsmodul 601 unter Vorgabe der Zeitspanne sowie des Drucks erzielt wird, als Referenz für das zweite Betriebsmodul 602 verwendet werden, welches die Abfüllung mittels einer Durchflussmessung steuert. Dieser Abgleich ist in Fig. 7 durch den Pfeil 700 veranschaulicht. Ein derartiger Abgleich ist immer dann sinnvoll, wenn zu erwarten ist, dass die Vorgabe der Zeitspanne sowie des Drucks zuverlässigere Ergebnisse liefert als eine Durchflussmessung. Dies ist insbesondere dann der Fall, wenn es sich bei dem abzufüllenden Medium um ein kompressibles Medium handelt oder wenn das Medium einen gewissen Anteil an Luft enthält, denn in diesen Fällen kann das von der Durchflussmessung gelieferte Ergebnis unter Umständen ungenau sein.

In umgekehrter Richtung kann die vom zweiten Betriebsmodul 602 durchgeführte durchflussbasierte Abfüllung entsprechend dem Pfeil 701 als Referenz für das erste Betriebsmodul 601 verwendet werden. Dies ist dann sinnvoll, wenn die auf einer Durchflussmessung basierende Abfüllung genauere Ergebnisse liefert als die Vorgabe von Zeitspanne und Druck. Dies ist beispielsweise dann der Fall, wenn die Viskosität des abzufüllenden Mediums gewissen Schwankungen unterliegt. In diesem Fall liefert die durchflussbasierte Abfüllung die zuverlässigeren Ergebnisse.

Durch das Abwiegen des befüllten Behälters lässt sich die Abfüllmenge im Allgemeinen mit hoher Genauigkeit bestimmen. Insofern eignet sich das vom dritten Betriebsmodul 603 zur Verfügung gestellte Wägesignal gut als Referenz für die anderen Betriebsmodule. Entsprechend dem Pfeil 702 kann das Wägesignal dem ersten Betriebsmodul 601 zugeführt werden, welches die Abfüllung in Abhängigkeit von einer vorgegebenen Zeitspanne und einem vorgegebenen Druck steuert. Der Abgleich des Abfüllergebnisses mit dem vom dritten Betriebsmodul 603 gelieferten Wägesignal ermöglicht eine Einstellung der vorgegebenen Zeitspanne und des vorgegebenen Drucks.

Das vom dritten Betriebsmodul 603 bereitgestellte Wägesignal kann außerdem entsprechend dem Pfeil 703 dem zweiten Betriebsmodul 602 zugeführt werden, welches die Abfüllung mittels einer Durchflussmessung steuert. Auf diese Weise kann das mittels der Durchflussmessung erzielte Abfüllergebnis an das als Referenz dienende Wägesignal angeglichen werden.

In umgekehrter Richtung können die vom ersten Betriebsmodul 601 bereitgestellten Signale zu Zeit und Druck der Abfüllung dem dritten Betriebsmodul 603 zugeführt werden, wie dies in Fig. 7 durch den Pfeil 704 dargestellt ist. Die Signale zu Zeit und Druck der Befüllung zeigen an, wann die Beaufschlagung des Behälters mit fließfähigem Medium beginnt und wann sie endet. Diese Signale sind für die Wägemessung deshalb von Bedeutung, weil sie ein verbessertes Verständnis des dynamischen Schwingungsverhaltens der Waage während der Befüllung des Behälters ermöglichen. Basierend auf der Information über Zeit und Druck der Abfüllung kann eine entsprechende Korrektur der Dynamik der Wägevorrichtung durchgeführt werden. Insofern eignen sich die vom ersten Betriebsmodul 601 bereitgestellten Signale zu Zeit und Druck der Abfüllung als Referenz für das dritte Betriebsmodul 603.

Auch der vom zweiten Betriebsmodul 602 erfasste Durchfluss als Funktion der Zeit eignet sich als Ausgangspunkt zur Abschätzung des Schwingungsverhaltens der Waage und kann zur Korrektur des Schwingungsverhaltens herangezogen werden. Insofern können die vom zweiten Betriebsmodul 602 bereitgestellten Informationen zum Durchfluss als Funktion der Zeit dem Betriebsmodul 603 als Referenz zur Verfügung gestellt werden, wie dies durch den Pfeil 705 veranschaulicht ist.

Das vierte Betriebsmodul 604 ist dazu ausgelegt, die Füllmenge über einen definierten Vorschub eines Kolbens oder eine definierte Bewegung einer Pumpe festzulegen. Zur Überwachung und Einstellung von mechanischen Größen kann dem vierten Betriebsmodul 604 beispielsweise der vom zweiten Betriebsmodul 602 erfasste Durchfluss als Funktion der Zeit zugeführt werden, wie dies durch den Pfeil 706 dargestellt ist. Der Durchflusswert kann dann als Referenz zur Einstellung mechanischer Größen verwendet werden, beispielsweise um den Kolbenhub oder das Ausmaß der Pumpenbewegung festzulegen.

Alternativ oder zusätzlich dazu kann auch das vom dritten Betriebsmodul 603 bereitgestellte Wägesignal als Referenz für das vierte Betriebsmodul 604 verwendet werden, wie dies durch den Pfeil 707 veranschaulicht ist. Auf Seiten des vierten Betriebsmoduls 604 können dann der Kolbenhub bzw. die Bewegung der Pumpe entsprechend dem Wägesignal so angepasst werden, dass ein gewünschtes Füllvolumen erreicht wird.

In umgekehrter Richtung kann das vierte Betriebsmodul 604 ein Signal bereitstellen, das die mechanische Bewegung des Kolbens bzw. der Pumpe anzeigt. Dieses Signal kann entsprechend dem Pfeil 708 dem zweiten Betriebsmodul 602 als Referenz zur Verfügung gestellt werden. Das zweite Betriebsmodul 602 ist dazu ausgelegt, die Abfüllung in Abhängigkeit vom erfassten Durchfluss zu steuern. In bestimmten Fällen, beispielsweise wenn das fließfähige Medium kompressibel ist oder Luft enthält, kommt es zu Abweichungen zwischen dem erfassten Durchfluss und dem tatsächlich abgefüllten Volumen. Derartige Messfehler, die bei der Durchflussmessung auftreten, können mit Hilfe des vom vierten Betriebsmodul 604 bereitgestellten Referenzsignals korrigiert werden.

## Patentansprüche

1. Abfüllanlage zur dosierten Abfüllung eines fließfähigen Mediums (101, 201, 301), welche aufweist:
einen Vorlagebehätter (100, 200, 300), der ein fließfähiges Medium (101, 201, 301) enthält, sowie eine Mehrzahl von Füllstellen, die über eine Zuführleitung (108, 211, 308) an den Vorlagebehälter (100, 200, 300) angeschlossen sind, wobei die Abfüllanlage, **gekennzeichnet durch** ein Steuerungssystem ist, aufweisend:
- ein Steuermodul (312-1, ... 312-m, 400) zum Steuern von mindestens einer der Füllstellen;
- mindestens einen Sensor (401) zum Erfassen von Messdaten, der über mindestens eine Datenverbindung mit dem Steuermodul verbunden ist,
- eine Speichereinheit (402) zum Speichern von Messdaten, die über eine Datenverbindung mit dem Steuermodul verbunden ist,
- mindestens einen Aktor (403), der über mindestens eine Datenverbindung mit dem Steuermodul verbunden ist,
- wobei zumindest die Datenverbindungen zwischen dem Steuermodul (312-1, ... 312-m, 400), dem mindestens einen Sensor (401) und der Speichereinheit (402) für Echtzeitanforderungen ausgelegt sind,
- wobei das Steuermodul (312-1, ... 312-m, 400) dazu ausgelegt ist, von dem mindestens einen Sensor (401) empfangene Messdaten in Echtzeit zu verarbeiten und in Echtzeit vollständig oder teilweise zur Speichereinheit (402) zu schreiben, und
- wobei das Steuermodul (312-1,... 312-m, 400) dazu ausgelegt ist, aus den Messdaten Schaltsignale für den mindestens einen Aktor (403) abzuleiten,
- wobei das Steuermodul aufweist;
- mindestens eine Schnittstelle (600A, 600B, 600C, 600D) zum Anschluss von mindestens einem Sensor (401) zum Erfassen von Messdaten, zum Anschluss von einer Speichereinheit (402) zum Speichern von Messdaten und zum Anschluss von mindestens einem Aktor (403),
- wobei das Steuermodul (312-1,... 312-m, 400) dazu ausgelegt ist, über die mindestens eine Schnittstelle (600A, 600B, 600C, 600D) Datenverbindungen zu dem mindestens einen Sensor (401), zu der Speichereinheit (402) und zu dem mindestens einen Aktor (403) auszubilden, wobei zumindest die Datenverbindungen zu dem mindestens einen Sensor (401) und zu der Speichereinheit (402) für Echtzeitanforderungen ausgelegt sind,
- wobei das Steuermodul (312-1, ... 312-m, 400) dazu ausgelegt ist, von dem mindestens einen Sensor (401) empfangene Messdaten in Echtzeit zu verarbeiten und in Echtzeit vollständig oder teilweise zur Speichereinheit (402) zu schreiben, und
- wobei das Steuermodul (312-1, ... 312-m, 400) dazu ausgelegt ist, aus den Messdaten Schaltsignale für den mindestens einen Aktor (403) abzuleiten,
- und wobei das Steuermodul (312-1,... 312-m, 400) unterschiedliche Betriebsmodule für unterschiedliche Füllmethoden umfasst.

2. Abfüllanlage nach Anspruch 1, wobei das Steuermodul dazu ausgelegt ist, eine Datenverbindung zu einer übergeordneten Maschinensteuerung zur Koordination von Abläufen in der Abfüllanlage auszubilden, wobei die Datenverbindung zwischen dem Steuermodul und der übergeordneten Maschinensteuerung nicht notwendigerweise für Echtzeitanforderungen ausgelegt ist.

3. Abfüllanlage nach Anspruch 1, **gekennzeichnet durch**:
- das Steuermodul ist dazu ausgelegt, aus den Messdaten in Echtzeit Schaltsignale für den mindestens einen Aktor abzuleiten und zu dem mindestens einen Aktor zu übertragen.

4. Abfüllanlage nach Anspruch 1 oder Anspruch 3, **dadurch gekennzeichnet, dass** das Steuerungssystem weitere Steuermodule zur Steuerung weiterer Füllstellen umfasst.

5. Abfüllanlage nach einem der Ansprüche 1, 3 bis 4, **dadurch gekennzeichnet, dass** ein erster Teilbereich des Steuerungssystems, der insbesondere das Steuermodul, den mindestens einen Sensor, die Speichereinheit sowie die Datenverbindungen zwischen dem Steuermodul, dem mindestens einen Sensor und der Speichereinheit umfasst, für Echtzeitanforderungen geeignet ausgelegt ist,
wobei ein zweiter Teilbereich des Steuerungssystems, der insbesondere die übergeordnete Maschinensteuerung sowie die Datenverbindung zwischen dem Steuermodul und der übergeordneten Maschinensteuerung umfasst, nicht notwendigerweise für Echtzeitanforderungen geeignet ausgelegt sein muss.

6. Abfüllanlage nach einem der Ansprüche 1, 3 bis 5, **gekennzeichnet durch**:
- die Datenverbindung zwischen dem Steuermodul und der Speichereinheit ist mittels eines für Echtzeitanforderungen geeigneten Industrial Ethernet Protokolls realisiert.

7. Abfüllanlage nach einem der Ansprüche 1, 3 bis 6, **dadurch gekennzeichnet, dass** mindestens eine der Datenverbindungen zwischen dem Steuermodul, dem mindestens einen Sensor, der Speichereinheit, dem mindestens einen Aktor mittels mindestens einem der folgenden Industrial Ethernet Protokolle realisiert ist PROFINET IRT, POWERLINK, EtherNet/IP, EtherCAT, SERCOS III.

8. Abfüllanlage nach einem der Ansprüche 1, 3 bis 7, **dadurch gekennzeichnet, dass** das Steuermodul dazu ausgelegt ist, von dem mindestens einen Sensor Messdaten in einem zeitlichen Abstand von etwa 1 ms zu empfangen.

9. Abfüllanlage nach einem der Ansprüche 3 bis 9, **gekennzeichnet durch**:
- bei der Speichereinheit handelt es sich um ein externes Speichermedium.

10. Abfüllanlage nach einem der Ansprüche 1, 3 bis 9, **gekennzeichnet durch**:
- das Steuermodul ist dazu ausgelegt, einen Verlauf des erfassten Durchflusses als Funktion der Zeit mit einem vorgegebenen Sollverlauf zu vergleichen und bei Änderungen des Verlaufs die Schaltsignale entsprechend anzupassen.

11. Abfüllanlage nach einem der Ansprüche 1, 3 bis 10, **gekennzeichnet durch** mindestens eines von folgenden:
- das Steuermodul ist dazu ausgelegt, die von einem Betriebsmodul gelieferten Steuersignale einem anderen Betriebsmodul als Referenz für eine andere Füllmethode zuzuführen;
- das Steuermodul unterstützt mindestens zwei verschiedene Füllmethoden, wobei das Steuermodul dazu ausgelegt ist, Steuersignale einer Füllmethode zur Korrektur oder zum Abgleich einer Abfüllung mittels einer anderen Füllmethode zu verwenden.

12. Abfüllanlage nach einem der Ansprüche 1, 3 bis 11, **gekennzeichnet durch**:
- das Steuermodul umfasst mindestens ein Betriebsmodul, das dazu ausgelegt ist, die Abfüllung mittels einer definierten mechanischen Betätigung eines Kolbens oder einer Pumpe zu steuern.

13. Abfüllanlage nach Anspruch 12 oder Anspruch 13, **gekennzeichnet durch**:
- das Steuermodul ist dazu ausgelegt, Steuersignale einer von einem vierten Steuermodul durchgeführten Abfüllung, die auf einem definierten Vorschub eines Kolbens oder einer definierten Bewegung einer Pumpe basiert, einem zweiten Betriebsmodul als Referenz für eine durchflussbasierte Steuerung der Abfüllung zuzuführen.

14. Verfahren zur Steuerung einer Abfüllanlage nach mindestens einem der Ansprüche 1 bis 13, wobei die Abfüllanlage ein Steuerungssystem umfasst, welches aufweist:
- ein Steuermodul (312-1, ... 312-m, 400),
- mindestens einen an das Steuermodul (312-1, ... 312-m, 400) angeschlossenen Sensor (401) zum Erfassen von Messdaten,
- eine an das Steuermodul (312-1, ... 312-m, 400) angeschlossene Speichereinheit (402) zum Speichern von Messdaten und
- mindestens einen an das Steuermodul (312-1, ... 312-m, 400) angeschlossenen Aktor (403),
wobei die Datenverbindungen zwischen dem mindestens einen Sensor (401), dem Steuermodul (312-1, ... 312-m, 400) und der Speichereinheit (402) als für Echtzeitanforderungen geeignete Datenverbindungen ausgelegt sind, und wobei das Verfahren folgende Schritte aufweist:
- Erfassen von Messdaten durch den mindestens einen Sensor (401);
- Übermitteln der Messdaten von dem mindestens einen Sensor (401) zum Steuermodul (312-1, ... 312-m, 400) in Echtzeit;
- Schreiben von Messdaten vollständig oder teilweise vom Steuermodul (312-1, ... 312-m, 400) zur Speichereinheit (402) in Echtzeit;
- Ableiten von Schaltsignalen für den mindestens einen Aktor (403) aus den Messdaten in Echtzeit durch das Steuermodul (312-1, ... 312-m, 400),
- Übermitteln der Schaltsignale vom Steuermodul (312-1, ... 312-m, 400) zu dem mindestens einen Aktor (403).

15. Verfahren nach Anspruch 14, **gekennzeichnet durch** folgenden zusätzlichen Schritt:
auf Seiten des Steuermoduls, Verarbeiten der empfangenen Messdaten in Echtzeit.

## Claims

1. Filling system for the metered bottling of a free-flowing medium (101, 201, 301), said system comprising:
a feeder tank (100, 200, 300), which contains a free-flowing medium (101, 201, 301),
as well as a multitude of filling points, which are connected to the feeder tank (100, 200, 300) via a supply line (108, 211, 308), wherein the filling system is **characterized by** a control system, comprising:
- a control module (312-1, ... 312-m, 400) for controlling at least one of the filling points;
- at least one sensor (401) for recording measuring data, said sensor being connected to the control module via at least one data connection,
- a memory unit (402) for storing measuring data, said unit being connected to the control module via a data connection,
- at least one actuator (403), which is connected to the control module via at least one data connection,
- wherein at least the data connections between the control module (312-1, ... 312-m, 400), the at least one sensor (401) and the memory unit (402) are designed for real-time requirements,
- wherein the control module (312-1, ... 312-m, 400) is designed to process measured data received from the sensor (401) in real time and to write the data in real time to the memory unit (402) entirely or in part, and
- wherein the control module (312-1, ... 312-m, 400) is designed to derive switching signals for the at least one actuator (403) from the measuring data,
- wherein the control module has:
- at least one interface (600A, 600B, 600C, 600D) designed for the connection of at least one sensor (401) to record measuring data, for the connection of a memory unit (402) for the storage of measuring data, and for the connection of at least one actuator (403),
- wherein the control module (312-1, ... 312-m, 400) is designed to form data connections, via the at least one interface (600A, 600B, 600C, 600D), to the at least one sensor (401), to the memory unit (402) and to the at least one actuator (403), wherein at least the data connections to the at least one sensor (401) and to the memory unit (402) are designed for real-time requirements,
- wherein the control module (312-1, ... 312-m, 400) is designed to process in real time measuring data received from the at least one sensor (401) and to write measuring data, entirely or in part, to the memory unit (402) in real time, and
- wherein the control module (312-1, ... 312-m, 400) is designed to derive switching signals for the at least one actuator (403) from the measuring data
- and wherein the control module (312-1, ... 312-m, 400) comprises different operating modules for different filling methods.

2. Filling system as claimed in Claim 1, wherein the control module is designed to form a data connection to a higher-level machine controller for the purpose of coordinating processes in the filling system, wherein the data connection between the control module and the higher-level machine controller is not necessarily designed for real-time requirements.

3. Filling system as claimed in Claim 1, **characterized in that**:
- the control module is designed to derive, in real time, switching signals for the at least one actuator from the measuring data and to transmit the data to the at least one actuator.

4. Filling system as claimed in Claim 1 or Claim 3, **characterized in that** the control system comprises additional control modules to control additional filling points.

5. Filling system as claimed in one of the Claims 1, 3 to 4, **characterized in that**
- a first part of the control system, comprising, in particular, the control module the at least one sensor, the memory unit and the data connections between the control module, the at least one sensor and the memory unit, is designed such that it is suitable for real-time requirements,
- wherein a second part of the control system, comprising, in particular, the higher-level machine controller and the data connection between the control module and the higher-level machine controller does not necessarily need to be designed such that it is suitable for real-time requirements.

6. Filling system as claimed in one of the Claims 1, 3 to 5, **characterized in that**:
- the data connection between the control module and the memory unit is implemented by means of an Industrial Ethernet protocol that is suitable for real-time requirements.

7. Filling system as claimed in one of the Claims 1, 3 to 6, **characterized in that** at least one of the data connections between the control module, the at least one sensor, the memory unit, the at least one actuator is implemented via at least one of the following Industrial Ethernet protocols: PROFINET IRT, POWERLINK, Ethernet/IP, EtherCAT, SERCOS III.

8. Filling system as claimed in one of the Claims 1, 3 to 7, **characterized in that** the control module is designed to receive measuring data from the at least one sensor at an interval of approximately 1 ms.

9. Filling system as claimed in one of the Claims 3 to 8, **characterized in that**:
- the memory unit is an external storage medium.

10. Filling system as claimed in one of the Claims 1, 3 to 9, **characterized in that**:
- the control module is designed to compare a course of the recorded flow as a function of time with a predefined target course and to adapt the switching signals accordingly if the course changes.

11. Filling system as claimed in one of the Claims 1, 3 to 10, **characterized by** at least one of the following:
- the control module is designed to supply the control signals provided by an operating module to another operating module as the reference for another filling method;
- the control module supports at least two different filling methods, wherein the control module is designed to use control signals of a filling method to correct to adjust a filling using another filling method.

12. Filling system as claimed in one of the Claims 1, 3 to 11 **characterized in that**:
- the control module comprises at least one operating module which is designed to control the filling with a defined mechanical actuation of a piston or pump.

13. Filling system as claimed in Claim 12 or 13, **characterized in that**:
- the control module is designed to supply control signals of a filling that is performed by a fourth control module, said filling being based on a defined forward feed of a piston or a defined movement of a pump, to a second operating module as a reference for flow-based control of the filling process.

14. Method to control a filling system as claimed in at least one of the Claims 1 to 13, wherein the filling system comprises a control system having:
- a control module (312-1, ... 312-m, 400),
- at least one sensor (401) connected to the control module (312-1, ... 312-m, 400), said sensor being designed to record measuring data,
- a memory unit (402) connected to the control module (312-1, ... 312-m, 400), said unit being designed to store measuring data, and
- at least one actuator (403) connected to the control module (312-1, ... 312-m, 400),
wherein the data connections between the at least one sensor (401), the control module (312-1, ... 312-m, 400) and the memory unit (402) are designed as data connections that are suitable for real-time requirements, and wherein the method comprises the following steps:
- recording of measuring data by the at least one sensor (401) ;
- real-time transmission of the measuring data from the at least one sensor (401) to the control module (312-1, ... 312-m, 400):
- real-time writing of measuring data, entirely or in part, from the control module (312-1, ... 312-m, 400) to the memory unit (402);
- real-time derivation of switching signals for the at least one actuator (403) from the measuring data by the control module (312-1, ... 312-m, 400);
- transmission of the switching signals from the control module (312-1, ... 312-m, 400) to the at least one actuator (403).

15. Method as claimed in Claim 14, **characterized by** the following additional step: on the part of the control module, processing of the measuring data in real time.

## Revendications

1. Installation destinée au remplissage dosé d'un produit coulant (101, 201, 301), laquelle installation comporte :
un récipient collecteur (100, 200, 300), lequel contient un produit coulant (101, 201, 301), ainsi que plusieurs points de remplissage, qui sont raccordés à une conduite d'alimentation (108, 211, 308) au récipient collecteur (100, 200, 300), l'installation de remplissage étant **caractérisée par** un système de commande comprenant :
- un module de commande (312-1, ... 312-m, 400) destiné à la commande d'au moins un des points de remplissage ;
- au moins un capteur (401) destiné à l'acquisition de données de mesure, lequel capteur est relié avec le module de commande par l'intermédiaire d'au moins une liaison de données,
- une unité de mémoire (402) destinée à la mémorisation des données de mesure, laquelle unité est reliée avec le module de commande par l'intermédiaire d'une liaison de données,
- au moins un actionneur (403), lequel est relié avec le module de commande par l'intermédiaire d'une liaison de données,
- système pour lequel au moins les liaisons de données entre le module de commande (312-1, ... 312-m, 400), l'au moins un capteur (401) et l'unité de mémoire (402) sont conçues pour des exigences de temps réel,
- le module de commande (312-1, ... 312-m, 400) étant conçu de telle sorte à traiter en temps réel les données de mesure reçues par l'au moins un capteur (401) et à écrire en temps réel, intégralement ou partiellement, les données dans l'unité de mémoire (402), et
- le module de commande (312-1, ... 312-m, 400) étant conçu de telle sorte à déduire, à partir des données de mesure, des signaux de commutation pour l'au moins un actionneur (403),
- système pour lequel le module de commande comporte :
- au moins une interface (600A, 600B, 600C, 600D) destinée au raccordement d'au moins un capteur (401) destiné à l'acquisition de données de mesure, au raccordement d'une unité de mémoire (402) destinée à la mémorisation de données de mesure et au raccordement d'au moins un actionneur (403),
- le module de commande (312-1, ... 312-m, 400) étant conçu de telle sorte à constituer, par l'intermédiaire de l'au moins une interface (600A, 600B, 600C, 600D), des liaisons de données avec l'au moins un capteur (401), avec l'unité de mémoire (402) et avec l'au moins un actionneur (403), et où au minimum les liaisons de données avec l'au moins un capteur (401) et avec l'unité de mémoire (402) sont conçues pour des exigences de temps réel,
- le module de commande (312-1, ... 312-m, 400) étant conçu de telle sorte à traiter en temps réel les données de mesure reçues par le biais de l'au moins un capteur (401) et à écrire en temps réel ces données, intégralement ou partiellement, dans l'unité de mémoire (402), et
- le module de commande (312-1, ... 312-m, 400) étant conçu de telle sorte à déduire, à partir des données de mesure, des signaux de commutation pour l'au moins un actionneur (403)
- et le module de commande (312-1, ... 312-m, 400) comprenant différents modules d'exploitation pour différentes méthodes de remplissage.

2. Installation de remplissage selon la revendication 1, pour laquelle le module de commande est conçu de telle sorte à constituer une liaison de données avec une commande machine maître, en vue de la coordination des déroulements dans l'installation de remplissage, la liaison de données entre le module de commande et la commande machine maître n'étant pas nécessairement conçue pour des exigences de temps réel.

3. Installation de remplissage selon la revendication 1, **caractérisée en ce que** :
- le module de commande est conçu de telle sorte à déduire en temps réel, à partir des données de mesure, des signaux de commutation pour l'au moins un actionneur et à les transmettre vers l'au moins un actionneur.

4. Installation de remplissage selon la revendication 1 ou 3, **caractérisée en ce que** le système de commande comporte des modules de commande supplémentaires pour la commande de points de remplissage supplémentaires.

5. Installation de remplissage selon la revendication 1, 3 à 4, **caractérisée**
- **en ce qu'**une première zone partielle du système de commande, qui contient notamment le module de commande, l'au moins un capteur, l'unité de mémoire ainsi que les liaisons de données entre le module de commande, l'au moins un capteur et l'unité de mémoire, est conçue pour des exigences de temps réel,
- **en ce qu'**une deuxième zone partielle du système de commande, qui contient notamment la commande machine maître ainsi que la liaison de données entre le module de commande et la commande machine maître, ne doit pas nécessairement être conçue pour des exigences de temps réel.

6. Installation de remplissage selon la revendication 1, 3 à 5, **caractérisée en ce que**
- la liaison de données entre le module de commande et l'unité de mémoire est réalisée au moyen d'un protocole Industrial Ethernet doté de capacités de temps réel.

7. Installation de remplissage selon la revendication 1, 3 à 6, **caractérisée en ce qu'**au moins l'une des liaisons de données entre le module de commande, l'au moins un capteur, l'unité de mémoire, l'au moins un actionneur, est réalisée au moyen d'un des protocoles Industrial Ethernet suivants : PROFINET IRT, POWERLINK, Ethernet/IP, EtherCAT, SERCOS III.

8. Installation de remplissage selon la revendication 1, 3 à 7, **caractérisée en ce que** le module de commande est conçu de telle sorte à recevoir de l'au moins un capteur des données de mesure dans un intervalle de temps d'environ 1 ms.

9. Installation de remplissage selon la revendication 3 à 8, **caractérisée en ce que** :
- concernant l'unité de mémoire, il s'agit d'un support de stockage externe.

10. Installation de remplissage selon la revendication 1, 3 à 9, **caractérisée en ce que**
- le module de commande est conçu de telle sorte qu'une allure du débit mesuré en fonction du temps est comparée avec une allure de consigne prédéfinie et, en cas de modifications, l'allure des signaux de commutation est adaptée en conséquence.

11. Installation de remplissage selon la revendication 1, 3 à 10, **caractérisée par** au moins l'un des points suivants :
- le module de commande est conçu de telle sorte à acheminer les signaux de commande fournis par un module de service vers un autre module de service en tant que référence pour une autre méthode de remplissage ;
- le module de commande prend en charge au moins deux méthodes de remplissage différentes, le module de commande étant conçu de telle sorte à utiliser les signaux de commande d'une méthode de remplissage pour la correction ou pour l'adaptation d'un remplissage au moyen d'une autre méthode de remplissage.

12. Installation de remplissage selon la revendication 1, 3 à 11 **caractérisée en ce que** :
- le module de commande comprend au moins un module de service, qui est conçu de telle sorte à commander le remplissage au moyen d'un actionnement mécanique défini d'un piston ou d'une pompe.

13. Installation de remplissage selon la revendication 12 ou 13, **caractérisée en ce que** :
- le module de commande est conçu de telle sorte à acheminer des signaux de commande d'un remplissage effectué par un quatrième module de commande, lequel remplissage est basé sur une avance définie d'un piston ou un mouvement défini d'une pompe, vers un deuxième module de service en tant que référence pour une commande du remplissage basée sur le débit.

14. Procédé destiné à la commande d'une installation de remplissage selon au moins l'une des revendications 1 à 13, pour lequel l'installation de remplissage comporte un système de commande, lequel système comprend :
- un module de commande (312-1, ... 312-m, 400),
- au moins un capteur (401) raccordé au module de commande (312-1, ... 312-m, 400), lequel capteur est destiné à l'acquisition de données de mesure,
- une unité de mémoire (402) raccordée au module de commande (312-1, ... 312-m, 400), laquelle unité est destinée à la mémorisation des données de mesure, et
- au moins un actionneur (403) raccordé au module de commande (312-1, ... 312-m, 400),
- système pour lequel les liaisons de données entre l'au moins un capteur (401), le module de commande (312-1, ... 312-m, 400) et l'unité de mémoire (402) sont conçues en tant que liaisons de données adaptées pour des exigences de temps réel, et le procédé comprenant les étapes suivantes :
- Acquisition de données de mesure par l'au moins un capteur (401) ;
- Transmission en temps réel des données de mesure depuis l'au moins un capteur (401) vers le module de commande (312-1, ... 312-m, 400) :
- Écriture en temps réel de données de mesure, intégrale ou partielle, depuis le module de commande (312-1, ... 312-m, 400) vers l'unité de mémoire (402) ;
- Déduction en temps réel de signaux de commutation pour l'au moins un actionneur (403) à partir des données de mesure, par le module de commande (312-1, ... 312-m, 400) ;
- Transmission des signaux de commutation depuis le module de commande (312-1, ... 312-m, 400) vers l'au moins un actionneur (403).

15. Procédé selon la revendication 14, **caractérisé par** l'étape supplémentaire suivante : du côté du module de commande, traitement en temps réel des données de mesure reçues.
